# EUROPEAN PATENT SPECIFICATION

(11) **EP 2 084 697 B1**
(45) Date of publication and mention of the grant of the patent: **10.12.2014**
(21) Application number: 07833343.2
(22) Date of filing: 15.10.2007
(51) Int. Cl.: G09F 23/04, G09F 15/00, A63J 5/00, G06Q 30/00, A63J 25/00, G09F 19/00, G09F 13/00, G06Q 30/02, G06Q 99/00, G09F 13/04, G09F 13/18

(54) **ADVERTISEMENT APPARATUS USING A SCREEN**
EINEN BILDSCHIRM VERWENDENDE REKLAMEVORRICHTUNG
APPAREIL PUBLICITAIRE FAISANT APPEL À UN ÉCRAN

(43) Date of publication of application: 05.08.2009
(73) Proprietor: Sang-Wha Communications, Seoul 135-090 (KR)
(72) Inventor: JUNG, Beom-Joon, Yongsan-gu, Seoul 140-772 (KR)
(74) Representative: Vogel, Andreas
(86) International application number: PCT/KR2007/005034
(87) International publication number: WO 2009/051285

(56) References cited:
- EP-A2- 1 617 396
- DE-A1- 10 143 139
- FR-A1- 2 896 906
- GB-A- 2 387 355
- KR-A- 20010 088 775
- US-A1- 2005 076 393
- US-A1- 2006 059 743
- US-A1- 2006 059 743
- US-A1- 2007 061 837

## Description

### [Technical Field]

The present invention relates to an advertising apparatus, and more particularly to an advertising apparatus using a screen outputting a predetermined image.

### [Background Art]

In a broad sense, advertising means an investing activity performed by a company, a private person or a group to accomplish an expected object by publicizing certain goods, services, ideologies, creeds, policies and the like.

In a narrow sense, the advertising also means an activity to make an operating profit by informing consumers of information on certain products including services or goods (hereinafter, referred to as 'ad product') offered by the company, the private person or the group. Advertisements can be made in diverse forms according to circumstances including viewers, regions, ad products, and advertising media.

Especially, a movie theater, for example, is growing fast as a new advertising place expected to maximize the advertising effect with recent development of the film industry by revitalized multiplex cinemas and increasing moviegoers.

The advertisement performed in the movie theater is achieved by outputting movie trailers or a predetermined image containing the product information through a screen before showing of the movie.

However, the conventional in-theater advertisements have drawbacks as follows.

First, the in-theater advertisement image generally requires a kinescope recording (Kineco) for converting a digitally photographed source to an analog film to suit for a projection system of the theater. Therefore, the Kineco should be performed upon every change of the movie to be shown. Second, advertisements need to be impressive so that the viewers are strongly aware of characteristics of the ad product. However, the advertisement in the form of an image may not be enough to effectively deliver the characteristics of the ad product and bring reality to the viewers. Advertisers spend excessive production costs to overcome the above deficiency, thereby affecting the price of the ad products and consequently imposing high cost on consumers.

Third, the conventional advertisements do not have any function other than merely showing a predetermined advertisement image on the screen.

Especially, movie viewers who have things to do before showing of the movie hardly avoid missing the showtime or postponing the things to after the end of the movie because they are not informed of exactly how long is left until the showtime while the advertisement image is showing. Such inconvenience to the movie viewers may deteriorate the advertising effect finally. For another example, outdoor advertising is achieved by outputting a predetermined advertisement image containing information on the ad product through an outdoor screen, in a region with a lot of floating population.

The outdoor advertisement, still using the advertisement image only, is also limited in effectively delivering the product characteristics and bringing reality to the viewers. That is, the outdoor advertisement has similar problems to the in-theater advertisement.

DE 10143139 A1 discloses an advertising apparatus according to the preamble of the present claim 1.

### [Disclosure]

### [Technical Problem]

Therefore, the present invention has been made in view of the above problems, and it is an object of the present invention to provide an advertising apparatus using a screen, capable of being constantly used without a dedicated reworking regardless of change of a predetermined image to be output through a screen.

Another object of the present invention is to provide an advertising apparatus using a screen, capable of overcoming a limit of a conventional advertisement image, the limit in delivering characteristics of ad products and bringing reality to viewers.

Yet another object of the present invention is to provide an advertising apparatus using a screen, capable of preventing deterioration of advertising effect induced by causing inconvenience to the viewers.

### [Technical Solution]

In order to achieve the above objects of the present invention, there is provided an advertising apparatus according to the present claims 1-8.

### [Advantageous Effects]

According to embodiments of the present invention, the following effects can be obtained. Although an image to be output through a screen is changed, an advertisement once made can be constantly used without necessitating a dedicated reworking. Therefore, expenses for the reworking or replacement can be saved.

In addition, since the screen itself is embodied as an ad product, efficiency for delivering characteristics of the ad product and for bringing reality to viewers can be improved. Thus, the viewers can be more strongly impressed by the advertisement. As a result, the advertising effect can be highly enhanced.

### [Description of Drawings]

The above and other objects, features and other advantages of the present invention will be more clearly understood from the following detailed description taken in conjunction with the accompanying drawings, in which:
Fig. 1 is a perspective view schematically showing a using state of an advertising apparatus using a screen;
Fig. 2 is a block diagram schematically showing a controlling unit and its associated parts of the advertising apparatus;
Fig. 3 is a perspective view showing the advertising apparatus having a modified auxiliary expressing unit;
Fig. 4 is a perspective view schematically showing a using state of an advertising apparatus using a screen;
Fig. 5 through Fig. 9 show examples of the using state of the advertising apparatus;
Fig. 10 is a perspective view schematically showing a using state of an advertising apparatus using a screen and
Fig. 11 is a block diagram showing a controlling unit and its associated parts of the advertising apparatus according to an embodiment of the present invention.

### [Mode for Invention]

Hereinafter, certain embodiments of an advertising apparatus using a screen according to the present invention will be described in detail with reference to the accompanying drawings.

Three embodiments having different structures of an advertisement frame will be explained in order.

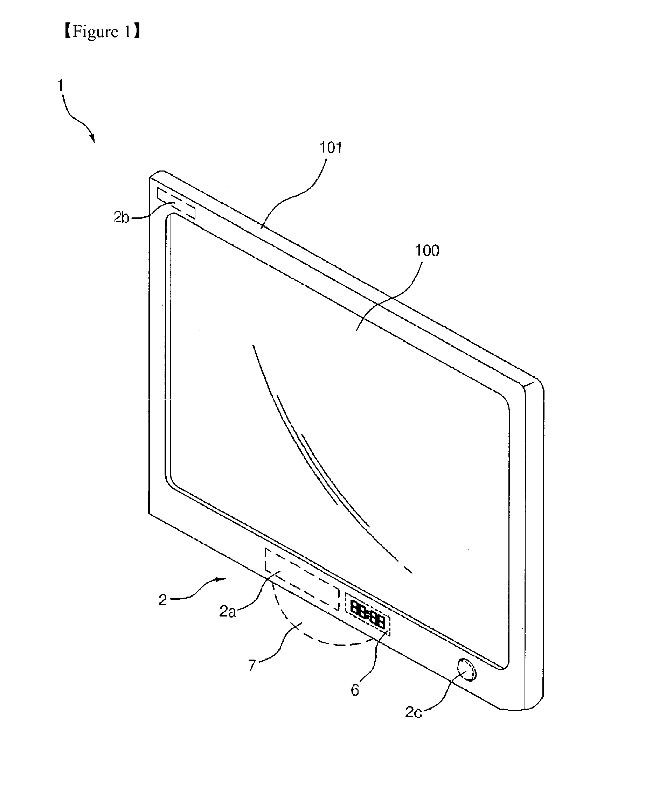

Fig. 1 is a perspective view schematically showing a using state of an advertising apparatus using a screen.

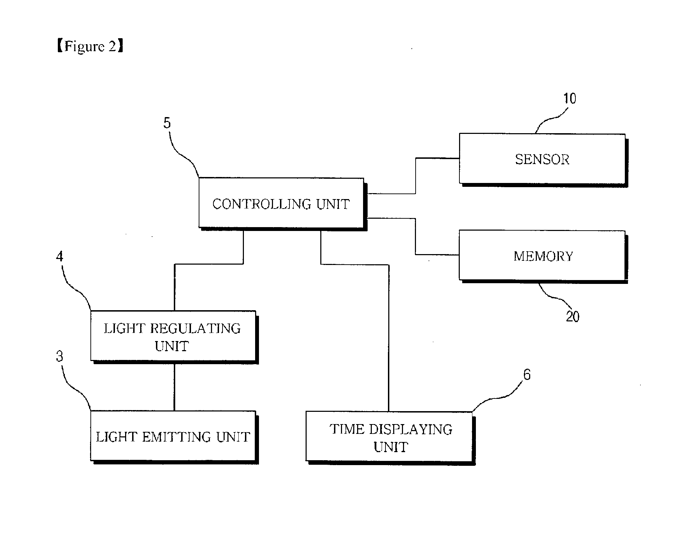

Fig. 2 is a block diagram schematically showing a control unit and its associated parts of the advertising apparatus.

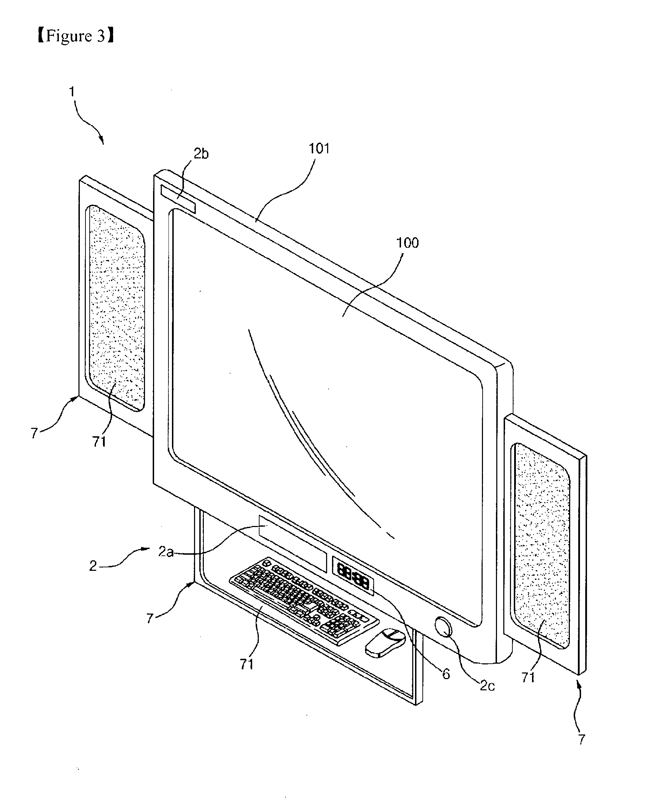

Fig. 3 is a perspective view showing the advertising apparatus, having a modified auxiliary expressing unit.

Referring to Figs. 1 and 2, an advertising apparatus 1 using a screen, comprises a product expressing unit 2, a light emitting unit 3, a light regulating unit 4, a controlling unit 5, a time displaying unit 6, and an auxiliary expressing unit 7.

The product expressing unit 2 is mounted to a frame 101 of a screen 100 to exhibit the screen 100 as an ad product.

Here, the ad products designate services and goods offered by a company, a private person or a group. For example, the ad products may include an image outputting device such as a computer monitor and a TV, a multimedia playing device such as a portable multimedia player (PMP) and an MP3 player, and a communication terminal such as a mobile phone, a personal digital assistant (PDA) and a navigator.

The product expressing unit 2 may express at least one of a trade name and logo of the company, a product name and brand name, and a structure performing a function of the product, which are actually mounted to the above-mentioned ad products.

For example, the trade name and logo of the company may be 'SAMSUNG', 'LG,' or 'HP.' The product name and brand name may be 'XCANVAS' or 'SyncMaster.' The structure performing the function of the product may be a power button or a volume control button.

At least one product expressing unit 2 can be mounted on a predetermined position of the frame 101, or substantially at the same position as in the actual ad product.

As shown in Fig. 1, the product expressing unit 2 may be disposed on the frame 101 specifically at a lower middle part 2a, an upper corner 2b, or a lower opposite corner 2c of the screen 100.

Therefore, the advertising apparatus 1 using the screen 100 enables the viewers to recognize the screen 100 as an ad product, thereby improving efficiency for delivering characteristics of the ad product and reality brought to the viewers. Thus, the viewers can be more strongly impressed by the advertisement. As a consequence, the advertising effect is enhanced.

In addition, when the advertising apparatus 1 is applied to the screen 100 installed indoors or outdoors, the product expressing unit 2 can be constantly used without requiring a reworking regardless of change of a predetermined image to be output through the screen 100.

The product expressing unit 2 may be detachably connected to the frame 101. Although not shown, the product expressing unit 2 may be connected to the frame 101 using a specific fastener or by fitting.

According to this, the advertising apparatus 1 is capable of facilely changing the ad product by replacing only the product expressing unit 2, thereby saving cost incurred when changing the ad product.

Referring to Figs. 1 and 2, the light emitting unit 3 emits light to the product expressing unit 2 to make the product expressing unit 2 recognizable.

By emitting light to the product expressing unit 2, the light emitting unit 3 makes the product expressing unit 2 more recognizable in contrast with the screen 100.

When illuminance of a space where the screen 100 is installed is low, such as when the screen 100 is installed in an indoor theater or installed outdoors at night, the light emitting unit 3 emits the light to the product expressing unit 2 so that the product expressing unit 2 can be more clearly recognized.

A variety of lighting devices including a light emitting diode (LED), a neon lamp, a bulb, and a fluorescent lamp can be used for the light emitting unit 3. Also, the light emitting unit 3 may adopt various lighting methods such as direct lighting or indirect lighting.

Here, being made of a transparent or translucent material to transmit the light emitted by the light emitting unit 3, the product expressing unit 2 can be recognized as if the product expressing unit 2 were emitting the light by itself. Alternatively, the product expressing unit 2 may be made of an opaque material not transmitting the light of the light emitting unit 3. In this case, the product expressing unit 2 is recognized by a periphery thereof emitting the light.

Thus, the advertising apparatus 1 impresses the viewers with the ad product more strongly, by making the product expressing unit 2 recognizable by the light emitting unit 3.

The light emitting unit 3 can be detachably connected to the frame 101. Although not shown, the light emitting unit 3 may be connected using a specific fastener or by fitting.

More specifically, the light emitting unit 3 is connected to a predetermined position of the frame 101 to emit the light to the product expressing unit 2. For example, the light emitting unit 3 may be disposed around the position of the product expressing unit 2, within the product expressing unit 2, or between the product expressing unit 2 and the frame 101.

In the advertising apparatus 1, therefore, change of the ad product becomes convenient since the light emitting unit 3 can be easily replaced depending on the type of the product expressing unit 2. As a result, the cost for changing the ad product can be saved.

Referring to Figs. 1 and 2, the light regulating unit 4 regulates luminosity of the light emitting unit 3.

As the light regulating unit 4 turns on and off the light emitting unit 3 by applying or interrupting power with respect to the light emitting unit 3, the luminosity of the light emitting unit 3 is regulated.

Alternatively, the light regulating unit 4 may gradually increase and decrease the luminosity of the light emitting unit 3 using a variable resistor.

When the advertising apparatus 1 is applied to the screen 100 in a movie theater, the light regulating unit 4 operates in the following manner.

First, the light regulating unit 4 increases the luminosity of the light emitting unit 3 to the maximum degree until the showtime of movie, so that the viewers are strongly impressed by the ad product through the product expressing unit 2.

When the movie begins, the light regulating unit 4 now gradually decreases the luminosity. The light regulating unit 4 controls the light emitting unit 3 not to radiate during the showing of the movie in order to prevent the light emitting unit 3 from disturbing the viewer watching the movie. Last, while an ending credit is showing after the movie, the light regulating unit 4 gradually increases the luminosity to the maximum degree to strongly impress the viewers with the ad product through the product expressing unit 2.

Therefore, the viewers may even remember as if they had appreciated the movie through the ad product. Furthermore, afterward, recollection of the movie or an advertisement of the movie could remind the viewers of the ad product. Thus, the advertising effect can be highly enhanced. In a case where the advertising apparatus 1 is applied to an outdoor screen, the light regulating unit 4 may control the light emitting unit 3 not to radiate during output of a predetermined image but to radiate only during interruption of the image output.

Referring to Figs. 1 and 2, the controlling unit 5 controls the operation of the light regulating unit 4 that regulates luminosity of the light emitting unit 3.

The controlling unit 5 may control the light regulating unit 4 by using beginning information or ending information of the image being output through the screen 100.

In this case, the advertising apparatus 1 may further comprise a memory 20 for storing at least one of the beginning information and the ending information of the image. According to this, the controlling unit 5 is able to control the light regulating unit 4 through at least one of the beginning information and the ending information stored in the memory 20.

When the advertising apparatus 1 is applied to the screen 100 of an indoor movie theater, the controlling unit 5 may control the light regulating unit 4 in association with a lighting device for varying illuminance of the inside at the beginning and ending of the movie.

Otherwise, the controlling unit 5 may control the light regulating unit 4 using information on the illuminance of a place where the screen 100 is installed.

In this case, the advertising apparatus 1 may further comprise a sensor 10 for sensing the illuminance of the place.

Various types of sensors, for example, an optical sensor and a light detector circuit may be used for the sensor 10 as long as it is capable of sensing the illuminance of the place. Accordingly, the controlling unit 5 is capable of controlling the light regulating unit 4 by the illuminance information obtained by the sensor 10.

When the advertising apparatus 1 is applied to the screen 100 of the indoor movie theater, the sensor 10 may obtain the illuminance information by sensing luminosity of the lighting device installed in the movie theater, at the beginning and ending of the movie.

When the advertising apparatus 1 is applied to an outdoor screen, on the other hand, the sensor 10 may obtain the illuminance information by sensing variation in illuminance of the image being output.

Referring to Figs. 1 and 2, when the advertising apparatus 1 is applied to the movie theater screen 100, the time displaying unit 6 displays time left until the showtime of the movie.

By thus having an additional function of informing the viewers of the left time besides the mere advertising function, convenience of the advertising apparatus 1 for the viewers can be improved. With reference to Figs. 1 and 2, the auxiliary expressing unit 7, being in the form of peripheral devices of the ad product, is mounted directly to the screen 100 or installed around the screen 100.

More specifically, the auxiliary expressing unit 7 can be implemented in the form of the peripheral devices of the ad product, including a base of the image outputting device such as an LCD, a PDP and a monitor, a keyboard, a mouse, a mouse pad, a computer main body, a speaker, and an acoustic system for a home theater.

The advertising apparatus 1 is able to exhibit the screen 100 as the ad product with more reality through the auxiliary expressing unit 7. Therefore, the characteristics of the ad product can be more effectively delivered to the viewers. Also, the reality brought to the viewers is improved. Referring to Fig. 3 showing a modified example of the auxiliary expressing unit 7, the auxiliary expressing unit 7 may be connected to peripheral structures or the frame 101 of the screen 100. With respect to the frame 101 of the screen 100, the auxiliary expressing unit 7 may be disposed at one or more positions among the left, the right, above and below.

The auxiliary expressing unit 7 may include an auxiliary image outputting unit 71 that outputs an image of the peripheral devices of the ad product.

Image outputting devices including an LED board, a neon board, an LCD, and a PDP may be selected for the auxiliary image outputting unit 71. In this case, the auxiliary image outputting unit 71 can be mounted on a front of the auxiliary expressing unit 7.

If the auxiliary expressing unit 7 is implemented by one of the LED board, the neon board, the LCD and the PDP, the auxiliary image outputting unit 71 may be a screen of the above image outputting devices.

Although not shown, the auxiliary image outputting unit 71 is capable of outputting an image signal of the peripheral devices of the ad product, by receiving the image signal from the controlling unit 5 (Fig. 2).

Accordingly, the advertising apparatus 1 is able to exhibit the screen 100 as the ad product with reality through the auxiliary image outputting unit 71. Moreover, change of the ad product becomes easier because only replacement of the image signal of the peripheral devices is required. Consequently, the cost can be saved when changing the ad product.

The output image of the auxiliary image outputting unit 71 may be controlled by the controlling unit 5 (Fig. 2). In this case, more specifically, the controlling unit 5 (Fig. 2) controls the auxiliary image outputting unit 71 simultaneously with the light regulating unit 4 (Fig. 2), so that the image of the peripheral devices being output through the auxiliary image outputting unit 71 does not disturb the movie or the advertisement image showing on the screen 100.

Hereinafter, an advertising apparatus using a screen will be described with reference to the accompanying drawings.

Since this example includes almost similar structures to the previous example, only different features thereof will be explained.

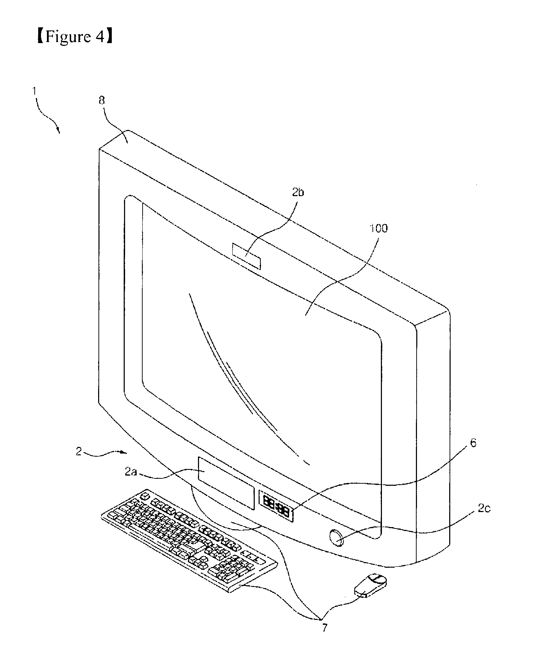

Fig. 4 is a schematic perspective view showing a using state of the advertising apparatus using a screen. Referring to Fig. 2 and Fig. 4, the advertising apparatus 1 according to this example further comprises an advertisement frame 8, differently from the previous example.

The advertisement frame 8 is connected to the outline of the screen 100. The product expressing unit 2 is connected to the advertisement frame 8. The advertisement frame 8 may be connected additionally to the frame 101 (Fig. 1) of the screen 100, or directly to the screen 100 without the frame 101.

The advertisement frame 8 is in the form of a frame of the ad product. Here, the frame denotes a main body of the ad product including an outer frame that receives the structure for outputting the predetermined image.

The advertisement frame 8 may be implemented in the form of a frame of any one of the image outputting device such as a computer monitor and a TV, the multimedia playing device such as a PMP and an MP3 player, and the communication terminal such as a mobile phone, a PDA and a navigator.

Preferably, the advertisement frame 8 has the same appearance as an actual frame of the ad product being advertised by the product expressing unit 2.

The advertisement frame 8 may be connected to be more protruded than the screen 100. In the actual ad product, if the outer frame receiving the image outputting structure is more protruded than the image outputting structure, the reality can be improved by such a cubic effect.

As described above, the advertising apparatus 1 having the advertisement frame 8 is capable of exhibiting the screen 100 as the ad product more actively and truly, thereby improving the efficiency for delivering the characteristics of the ad product and bringing the reality to the viewers.

The advertisement frame 8 may be detachably connected to the outline of the screen 100. Although not shown, the advertisement frame 8 may be connected using a specific fastener or by fitting. In this case, the product expressing unit 2 and the light emitting unit 3 may be detachably connected to the advertisement frame 8.

The advertising apparatus 1 of this embodiment can be constantly used without requiring any reworking, regardless of replacement of the predetermined image to be output through the screen 100. Furthermore, when changing the ad product, application of the advertising apparatus 1 to the changed ad product can be performed with ease.

In addition, without replacement of the whole advertisement frame 8, the ad product can be conveniently changed by replacing at least one of the product expressing unit 2 and the light emitting unit 3. Also, various advertising effects can be accomplished by varying the lighting methods.

The advertisement frame 8 may comprise a plurality of separable frames. When the advertisement frame 8 is connected to the screen 100, the separable frames can be assembled into an integral body through masking, painting, coating or thermal processing.

Such a separable structure of the advertisement frame 8 is advantageous in flexibly coping with circumstances of the screen 100, for example, when an entrance of the space where the screen 100 is installed is not large enough to pass the advertisement frame 8 in the integrated form. Moreover, portability of the advertisement frame 8 can be improved.

When the advertising apparatus 1 is applied to the screen 100 installed indoors, the advertisement frame 8 may be made of light materials such as plastic, Styrofoam, aluminum, acryl, glass film and so on. In this case, portability of the advertisement frame 8 is more improved. Additionally, human damage that may happen when the advertisement frame 8 unexpectedly falls from the screen 100 can be minimized.

When the advertising apparatus 1 is applied to the screen 100 installed outdoors, the advertisement frame 8 may be made of a relatively solid material such as a steel frame, a steel sheet, acryl, plastic and so on. Since the above materials are not easily deformed, loss of life and property can be prevented in spite of variation of the outdoor circumstances where the screen 100 is installed.

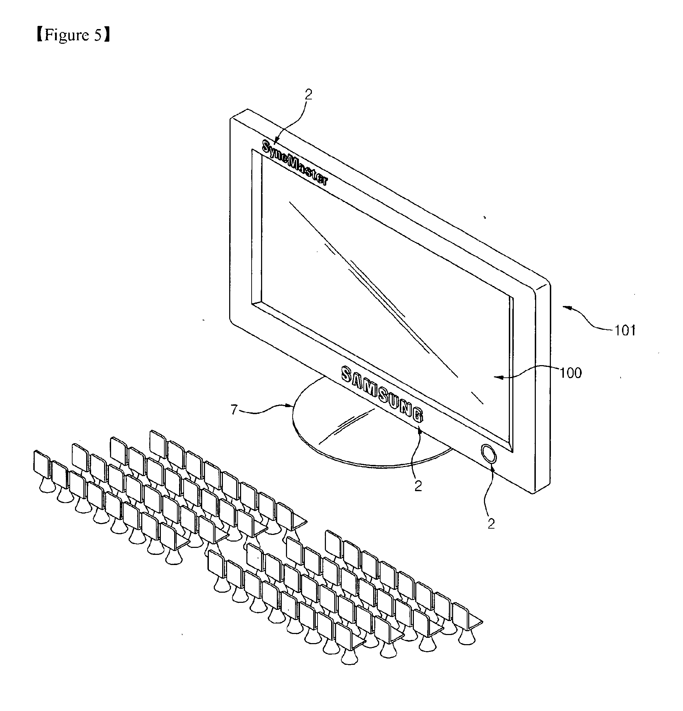

Hereinafter, various examples of using the advertising apparatus 1 will be described with reference to Figs. 5 through 9.

In Fig. 5, the screen 100 is installed in the indoor movie theater, and the ad product is the computer monitor.

Referring to Fig. 2 and Fig. 5, a plurality of the product expressing units 2 are connected to the frame 101 of the screen 100. Here, the product expressing units 2 include logos 'SAMSUNG' and 'SyncMaster,' and a power button.

Although not shown in Fig. 5, the light emitting unit 3 is disposed between the product expressing units 2 and the frame 101, in connection to the frame 101.

The light emitting unit 3 emits light to the product expressing units 2 made of a transparent or translucent material so as to make the product expressing units 2 recognizable. According to this, the product expressing units 2 can be recognized as if it were emitting light by itself.

The auxiliary expressing unit 7 is formed as a base of the computer monitor installed on a floor in front of the frame 101.

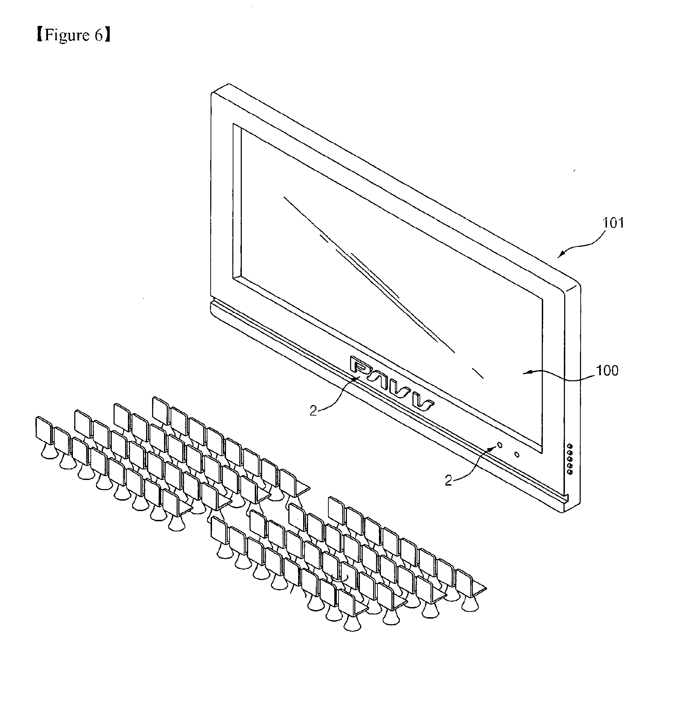

Fig. 6 shows an example where the screen 100 is installed in the indoor movie theater and the ad product is a TV.

Referring to Fig. 2 and Fig. 6, a plurality of the product expressing units 2 are connected to the frame 101 of the screen 100. Here, the product expressing units 2 include a logo 'PAVV', a power button, and a signal receiver.

Although not shown in Fig. 6, the light emitting unit 3 is connected to the frame 101.

The light emitting unit 3 emits light to the product expressing units 2 such as the power button and the signal reception unit made of a transparent or translucent material, to make the product expressing units 2 recognizable. According to this, the product expressing units 2 can be recognized as if it were emitting light by itself.

Alternatively, the light emitting unit 3 may emit light to the product expressing unit 2 such as the logo 'PAVV' made of an opaque material. In this case, the product expressing unit 2 can be recognized as if the periphery thereof were emitting the light.

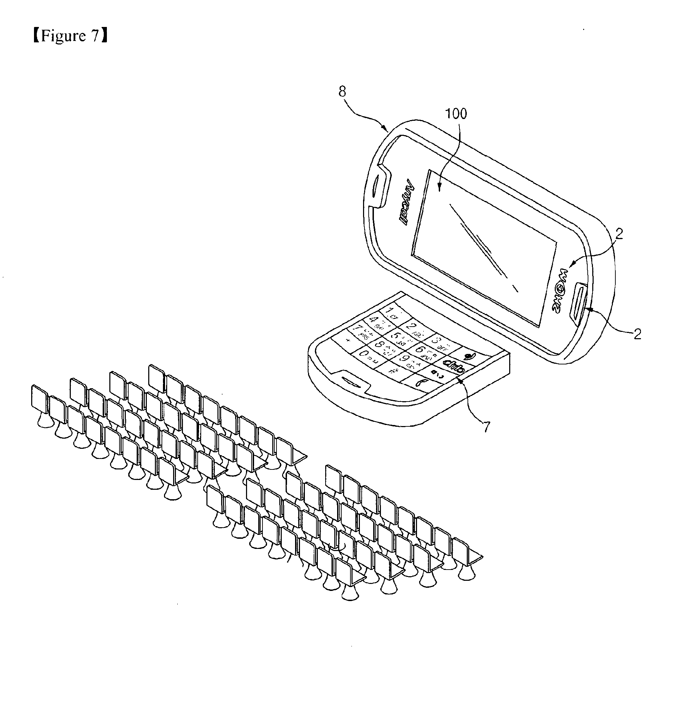

In an example of Fig. 7, the screen 100 is installed in the indoor movie theater and the ad product is the mobile phone.

Referring to Fig. 2 and Fig. 7, the advertisement frame 8 is manufactured in the form of a frame of the mobile phone and connected to the outline of the screen 100 to be protruded more than the screen 100.

The product expressing unit 2, more specifically, a plurality of the product expressing units 2 including logos 'anycall', and 'show', a mouthpiece, and an earpiece are connected to the advertisement frame 8.

Although not shown in Fig. 7, the light emitting unit 3 is connected to the advertisement frame 8. The light emitting unit 3 emits light to the product expressing units 2 made of a transparent or translucent material so as to make the product expressing units 2 recognizable. According to this, the product expressing units 2 can be recognized as if it were emitting light by itself.

The auxiliary expressing unit 7 is implemented in the form of a key pad of the mobile phone, and is installed on a floor in front of the advertisement frame 8.

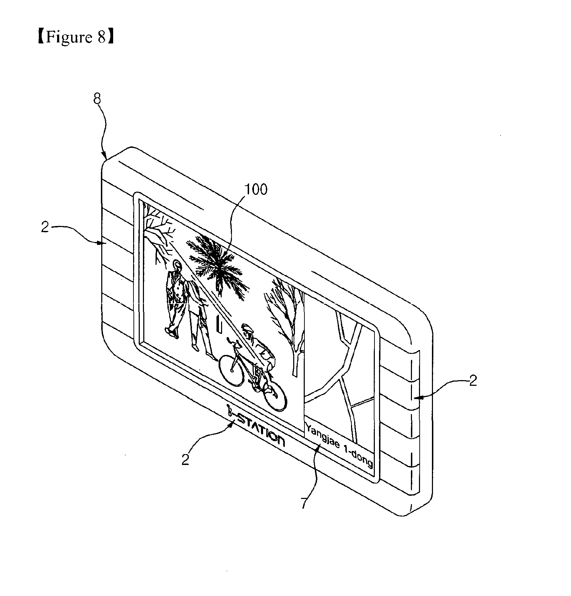

In an example of Fig. 8, the screen 100 is installed in the indoor movie theater and the ad product is the PMP.

Referring to Fig. 2 and Fig. 8, the advertisement frame 8 is manufactured in the form of a frame of the PMP, and is connected to the outline of the screen 100.

A plurality of the product expressing units 2 including a logo 'i-station,' and several function keys such as the power button are connected to the advertisement frame 8.

The light emitting unit 3 is connected to the advertisement frame 8 although not shown in Fig. 8.

The light emitting unit 3 emits light to the product expressing units 2 made of a transparent or translucent material so as to make the product expressing units 2 recognizable. According to this, the product expressing units 2 can be recognized as if it were emitting light by itself.

The auxiliary expressing unit 7 is manufactured in the form of a rectangular board illustrating a guiding picture of a navigator so as to imply that the ad product is equipped with a navigator function additionally to the PMP function. The auxiliary expressing unit 7 is mounted at one side of the advertisement frame 8.

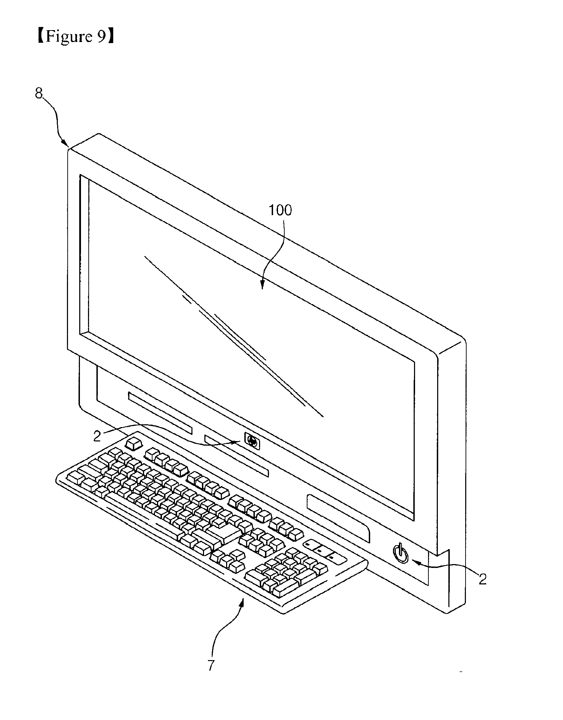

In an example of Fig. 9, the screen 100 is installed in an outdoor movie theater and the ad product is the computer.

Referring to Fig. 2 and Fig. 9, the advertisement frame 8 is manufactured in the form of the computer monitor and the frame of the computer main body, and is connected to the outline of the screen 100.

A plurality of the product expressing units 2 are connected to the advertisement frame 8. Here, the product expressing units 2 may include logos, various function keys such as the power button, figures and lines.

The light emitting unit 3 is connected to the advertisement frame 8 although not shown in Fig. 9. The light emitting unit 3 emits light to the product expressing units 2 such as the logos and the power buttons made of a transparent or translucent material, to make the product expressing units 2 recognizable. According to this, the product expressing units 2 can be recognized as if it were emitting light by itself.

Alternatively, the light emitting unit 3 may emit light to the product expressing units 2 such as the function keys, the figures and the lines made of an opaque material, to make the product expressing units 2 recognizable. Accordingly, the product expressing units 2 can be recognized as if the periphery thereof were emitting the light.

The auxiliary expressing unit 7 is manufactured in the form of the keyboard of the computer and installed on a floor in front of the advertisement frame 8.

Hereinafter, an advertising apparatus using a screen according to yet another embodiment of the present invention will be described in detail with reference to the drawings.

Since the yet another example and an embodiment of the present invention include almost similar structures to the first example, only different features thereof will be explained.

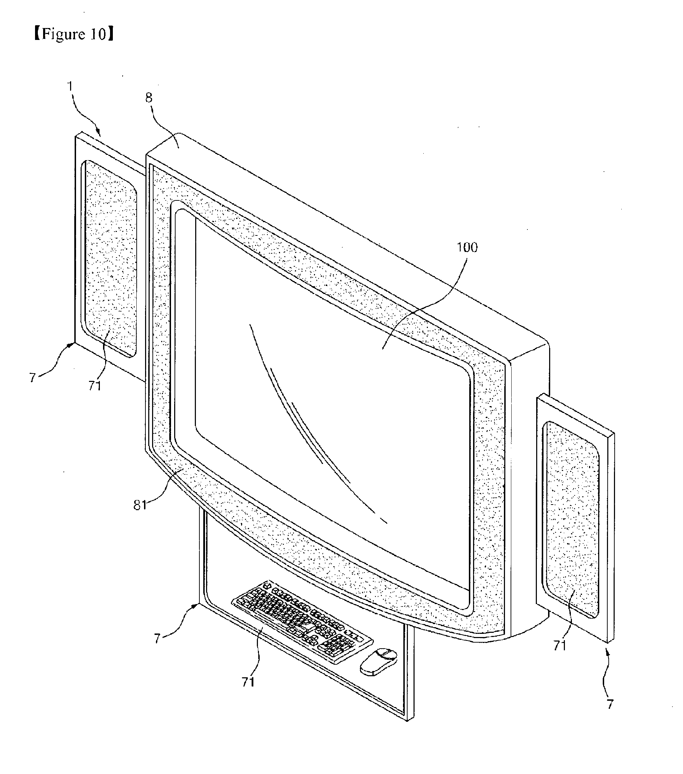

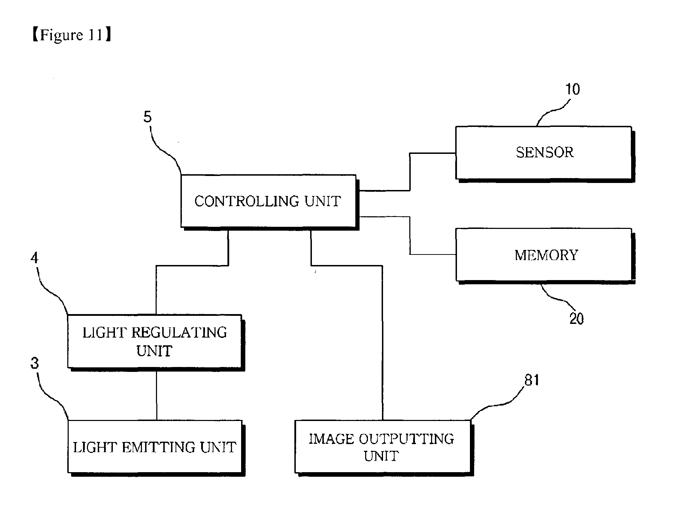

Fig. 10 is a perspective view showing a using state of the advertising apparatus according to the yet another example. Fig. 11 is a block diagram showing a controlling unit and its associated parts of the advertising apparatus according to an embodiment of the present invention.

The advertising apparatus 1 according to the embodiment of the present invention is different from the first example, in terms of the advertisement frame 8 and the controlling unit 5.

Referring to Fig. 10, the advertisement frame 8 is connected to the outline of the screen 100. More particularly, the advertisement frame 8 may be connected additionally to the frame 101 (Fig. 1) of the screen 100, or directly to the screen 100 without the frame 101.

The advertisement frame 8 may comprise an image outputting unit 81.

The image outputting unit 81 outputs at least one of a frame image of the ad product and at least one product expressing unit image, so as to exhibit the screen 100 as the ad product.

The frame image herein denotes an image of the main body of the ad product, the main body including the outer frame that receives the structure for outputting the predetermined image. For example, the frame image may be an image of the frame of the image outputting device such as the computer monitor and the TV, the multimedia playing device such as the PMP and the MP3 player, and the communication terminal such as the mobile phone, the PDA and the navigator.

The product expressing unit image herein denotes an image of at least one of the trade name and logo of the company, the product name and brand name, and the structure performing the function of the product. For example, the trade name and logo of the company may be 'SAMSUNG', 'LG,' or 'HP.' The product name and brand name may be 'XCANVAS' or 'SyncMaster.' The structure performing the function of the product may be a power button or a volume control button.

The LED board, the neon board, the LCD, and the PDP may be used for the image outputting unit 81. The image outputting unit 81, in this case, is connected to the front of the advertisement frame 8.

If the advertisement frame 8 is implemented by one of the LED board, the neon board, the LCD and the PDP, the image outputting unit 81 may be a screen of the above devices. In this case, the image outputting unit 81 may be a screen having a rectangular shape.

Although not shown, the image outputting unit 81 is capable of outputting a signal of the frame image of the ad product or at least one signal of the product expressing unit images, the signal being received from the controlling unit 5 (Fig. 11).

Accordingly, the advertising apparatus 1 is able to exhibit the screen 100 as the ad product with reality through the image outputting unit 81. Moreover, change of the ad product becomes easier because only replacement of the signal of the frame image or of the product expressing unit images is required. Consequently, the cost can be saved when changing the ad product.

In the same manner as in other previous examples, the advertisement frame 8 can be in the form of a frame of the ad product. More specifically, the advertisement frame 8 may include frames of the image outputting device such as the computer monitor and the TV, the multimedia playing device such as the PMP and the MP3 player, and the communication terminals such as the mobile phone, the PDA and the navigator.

It is preferable that the advertisement frame 8 has the same appearance as the actual frame of the ad product as shown by the product expressing unit image being output through the image outputting unit 81.

The advertisement frame 8 may comprise a plurality of separable frames. In this case, the image outputting units 81 may be provided to each of the separable frames. When the advertisement frame 8 is connected to the screen 100, the separable frames can be assembled into an integral body through masking, painting, coating or thermal processing.

Therefore, the advertising apparatus 1 is capable of efficiently coping with circumstances of the screen 100, for example, when an entrance of the space where the screen 100 is installed is not large enough to pass the advertisement frame 8 in the integrated form. Moreover, portability of the advertisement frame 8 can be improved.

When the advertising apparatus1 is applied to the screen 100 installed indoors, the advertisement frame 8 may be made of light materials such as plastic, Styrofoam, aluminum, acryl, glass film and so on. In this case, portability of the advertisement frame 8 is more improved. Additionally, human damage that may happen when the advertisement frame 8 unexpectedly falls from the screen 100 can be minimized.

When the advertising apparatus 1 is applied to the screen 100 installed outdoors, the advertisement frame 8 may be made of a relatively solid material such as a steel frame, a steel sheet, acryl, plastic and so on. Since the above materials are not easily deformed, loss of life and property can be prevented in spite of variation of the outdoor circumstances where the screen 100 is installed.

The advertisement frame 8 can be detachably connected to the outline of the screen 100. Although not shown, the advertisement frame 8 may be connected to the screen 100 using a specific fastener or by fitting.

With reference to Fig. 1 and Fig. 10, the product expressing unit 2 may be detachably connected to the advertisement frame 8 so that a specific part of the ad product, which is intended to be emphasized, can be clearly recognized. For the same purpose, both the product expressing unit 2 and the light emitting unit 3 may be detachably connected to the advertisement frame 8.

With reference to Fig. 10 and Fig. 11, the controlling unit 5 controls the image outputting unit 81 such that the frame image of the ad product and the product expressing unit image are output through the image outputting unit 81.

Here, the controlling unit 5 may control the image outputting unit 81 by using at least one of beginning information and ending information of the image being output through the screen 100. In this case, the advertising apparatus 1 may further comprise the memory 20 for storing at least one of the beginning information and the ending information. Thus, the controlling unit 5 is able to control the image outputting unit 81 by the beginning information or the ending information stored in the memory 20.

When the advertising apparatus 1 is applied to the screen 100 of the indoor movie theater, the controlling unit 5 may operate in association with the lighting device for varying illuminance of the inside at the beginning and ending of the movie.

Otherwise, the controlling unit 5 may operate using information on the illuminance of a place where the screen 100 is installed.

In this case, the advertising apparatus 1 may further comprise the sensor 10 for sensing the illuminance of the place.

Various types of sensors including the optical sensor and the light detector circuit may be used for the sensor 10 as long as it is capable of sensing the illuminance of the place. Accordingly, the controlling unit 5 is capable of controlling the image outputting unit 81 using the illuminance information obtained by the sensor 10.

When the advertising apparatus 1 is applied to the screen 100 of the indoor movie theater, the sensor 10 may obtain the illuminance information by sensing luminosity of the lighting device installed in the movie theater, at the beginning and ending of the movie.

When the advertising apparatus 1 is applied to the outdoor screen, on the other hand, the sensor 10 may obtain the illuminance information by sensing variation in illuminance of the image being output through the screen.

When the advertising apparatus 1 is applied to the screen 100 of the movie theater, the controlling unit 5 operates the image outputting unit 81 in the following manner.

First, the controlling unit 5 controls the image outputting unit 81 so that the frame image of the ad product and the product expressing unit image are output through the image outputting unit 81 until the showtime of the movie. By this, the controlling unit 5 can exhibit the screen 100 as the ad product.

When the movie begins, next, the controlling unit 5 gradually decreases brightness of the image being output through the image outputting unit 81. During the showing of the movie, the controlling unit 5 controls the image outputting unit 81 not to output the images such that the images output from the image outputting unit 81 do not disturb the viewer watching the movie. Last, while the ending credit is showing after the movie, the controlling unit 5 controls the image outputting unit 81 to gradually increase the brightness of the images so that the screen 100 can be exhibited as the ad product again.

Therefore, the viewers may even remember as if they had appreciated the movie through the ad product. Furthermore, afterward, recollection of the movie or an advertisement of the movie could remind the viewers of the ad product. Thus, the advertising effect can be highly enhanced. When the advertising apparatus 1 is applied to a screen other than the in-theater screen, the controlling unit 5 may control the image outputting unit 81 not to output the frame image and the product expressing unit image while the predetermined image is showing on the screen 100, but to output the frame image and the product expressing unit image while the predetermined image is not showing on the screen 100.

When the advertisement frame 8 is connected to the outline of the in-theater screen, the controlling unit 5 may control the image outputting unit 81 to additionally output an image indicating the time left until the showtime.

Although the preferred embodiment of the present invention has been disclosed for illustrative purposes, those skilled in the art will appreciate that various modifications, additions and substitutions are possible, without departing from the scope of the invention as disclosed in the accompanying claims.

## Claims

1. The advertising apparatus (1) using a screen (100), comprising:an advertisement frame (8) provided with the screen (100) and including an image outputting unit (81), wherein the image outputting unit (81) outputs a frame image of an ad product and a product expressing unit (2) image to exhibit the screen (100) as the ad product, **characterized by** a controlling unit (5) that controls the image outputting unit (81) in accordance with at least one of beginning information and ending information of an image being output through the screen (100), wherein the advertisement frame (8) is provided with a movie theater screen (100).

2. The advertising apparatus (1) using a screen (100) according to claim 1, wherein the image outputting unit (81) further outputs an image indication time left until showtime of a movie.

3. The advertising apparatus (1) using a screen (100) according to claim 1, further comprising an auxiliary image outputting unit (71) that outputs an image of peripheral devices of the ad product.

4. The advertising apparatus (1) using a screen (100) according to claim 1, further comprising an auxiliary expressing unit (7) being in the form of peripheral devices of the ad product.

5. The advertising apparatus (1) using a screen (100) according to claim 1, wherein the advertisement frame (8) is connected to be protruded more than the screen (100).

6. The advertising apparatus (1) using a screen (100) according to claim 1, further comprises a time displaying unit (6) that indicates time left until showtime of a movie.

7. The advertising apparatus (1) using a screen (100) according to claim 1, wherein the advertisement frame (8) is detachably connected to the screen (100) and constituted by a plurality of separable frames.

8. The advertising apparatus (1) using a screen (100) according to claim 1, wherein the advertisement frame (8) is manufactured in the form of one of an image outputting device, a multimedia playing device, or a communication terminal.

## Patentansprüche

1. Reklamevorrichtung (1), die einen Bildschirm (100) verwendet, aufweisend einen mit dem Bildschirm (100) ausgestatteten und eine Bildausgabeeinheit (81) aufweisenden Reklamerahmen (8),
wobei die Bildausgabeeinheit (81) ein Rahmenbild eines Reklameprodukts und ein Bild einer Wiedergabe-Einheit (2) zur Produktwiedergabe abbildet um anzuzeigen, dass der Bildschirm (100) das Reklameprodukt ist, **gekennzeichnet durch**
eine Steuereinheit (5), die die Bildausgabeeinheit (81) in Übereinstimmung mit wenigstens einem von Anfangsinformation und Abschlussinformation eines durch den Bildschirm (100) ausgegebenen Bildes steuert, wobei der Reklamerahmen (8) mit einem Filmtheaterbildschirm (100) ausgestattet ist.

2. Reklamevorrichtung (1), die einen Bildschirm (100) verwendet, nach Anspruch 1, wobei die Bildausgabeeinheit (81) ferner eine Bildangabe-Restzeit bis zum Vorstellungsbeginn eines Films ausgibt.

3. Reklamevorrichtung (1), die einen Bildschirm (100) verwendet, nach Anspruch 1, ferner aufweisend eine Zusatz-Bildausgabeeinheit (71), die ein Bild von Peripheriegeräten des Reklameprodukts ausgibt.

4. Reklamevorrichtung (1), die einen Bildschirm (100) verwendet, nach Anspruch 1, ferner aufweisend eine Zusatz-Wiedergabeeinheit (7), die in der Form von Peripheriegeräten des Reklameprodukts sind.

5. Reklamevorrichtung (1), die einen Bildschirm (100) verwendet, nach Anspruch 1, wobei der Reklamerahmen (8) so angeschlossen ist, dass er mehr als der Bildschirm (100) hervorsteht.

6. Reklamevorrichtung (1), die einen Bildschirm (100) verwendet, nach Anspruch 1, ferner aufweisend eine Zeitanzeigeeinheit (6), die die Restzeit bis zum Vorstellungsbeginn eines Films ausgibt.

7. Reklamevorrichtung (1), die einen Bildschirm (100) verwendet, nach Anspruch 1, wobei der Reklamerahmen (8) abnehmbar am Bildschirm (100) angeschlossen und durch mehrere separate Rahmen zusammengestellt ist.

8. Reklamevorrichtung (1), die einen Bildschirm (100) verwendet, nach Anspruch 1, wobei der Reklamerahmen (8) in der Form von einem von einem Bildausgabegerät, einem Multimedia-Abspielgerät oder einem Kommunikationsendgerät hergestellt ist.

## Revendications

1. Appareil publicitaire (1) utilisant un écran (100), comprenant un cadre de publicité (8) prévu avec l'écran (100) et incluant une unité de restitution d'image (81), dans lequel l'unité de restitution d'image (81) restitue une image de cadre d'un produit publicitaire et une image d'unité d'expression de produit (2) pour présenter l'écran (100) comme le produit publicitaire, **caractérisé par**
une unité de commande (5) qui commande l'unité de restitution d'image (81) en fonction d'au moins l'une d'une information de début et d'une information de fin d'une image qui est restituée par le biais de l'écran (100),
dans lequel le cadre de publicité (8) est doté d'un écran de cinéma (100).

2. Appareil publicitaire (1) utilisant un écran (100)
selon la revendication 1, dans lequel l'unité de restitution d'image (81) restitue en outre un temps d'indication en image restant jusqu'au moment de la diffusion d'un film.

3. Appareil publicitaire (1) utilisant un écran (100)
selon la revendication 1, comprenant en outre une unité de restitution d'image auxiliaire (71) qui restitue une image de dispositifs périphériques du produit publicitaire.

4. Appareil publicitaire (1) utilisant un écran (100) selon la revendication 1, comprenant en outre une unité d'expression auxiliaire (7) qui se présente sous la forme de dispositifs périphériques du produit publicitaire.

5. Appareil publicitaire (1) utilisant un écran (100) selon la revendication 1, dans lequel le cadre de publicité (8) est connecté de manière à dépasser plus que l'écran (100).

6. Appareil publicitaire (1) utilisant un écran (100) selon la revendication 1, comprenant en outre une unité d'affichage de temps (6) qui indique un temps restant jusqu'au moment de la diffusion d'un film.

7. Appareil publicitaire (1) utilisant un écran (100) selon la revendication 1, dans lequel le cadre de publicité (8) est connecté de manière amovible à l'écran (100) et est constitué de plusieurs cadres séparables.

8. Appareil publicitaire (1) utilisant un écran (100) selon la revendication 1, dans lequel le cadre de publicité (8) est fabriqué sous la forme de l'un d'un dispositif de restitution d'image, d'un dispositif de lecture multimédia, ou d'un terminal de communication.
